Europäisches Patentamt

European Patent Office

Office européen des brevets

(19)

(11) Numéro de publication: **0 133 081**
**B1**

# FASCICULE DE BREVET EUROPEEN

(12)

(45) Date de publication du fascicule du brevet:
**05.10.88**

(51) Int. Cl.⁴: **H 04 J 3/06**

(21) Numéro de dépôt: **84401411.8**

(22) Date de dépôt: **03.07.84**

(54) Dispositif de synchronisation pour transmission numérique avec trames, et récepteur comportant un tel dispositif.

(30) Priorité: **12.07.83 FR 8311614**

(43) Date de publication de la demande:
**13.02.85 Bulletin 85/7**

(45) Mention de la délivrance du brevet:
**05.10.88 Bulletin 88/40**

(84) Etats contractants désignés:
**BE CH DE GB LI NL**

(56) Documents cités:
**FR - A - 2 467 516**
**US - A - 3 603 735**
**US - A - 4 298 987**

(73) Titulaire: **ALCATEL CIT, 33, rue Emeriau, F-75015 Paris (FR)**

(72) Inventeur: **Niquel, Maurice, THOMSON-CSF SCPI 173, bld Haussmann, F-75379 Paris Cedex 08 (FR)**
Inventeur: **Gourdon, Claude, THOMSON-CSF SCPI 173, bld Haussmann, F-75379 Paris Cedex 08 (FR)**
Inventeur: **Rouxel, Jean, THOMSON-CSF SCPI 173, bld Haussmann, F-75379 Paris Cedex 08 (FR)**

(74) Mandataire: **Weinmiller, Jürgen et al, Lennéstrasse 9 Postfach 24, D-8133 Feldafing (DE)**

## Description

La présente invention se rapporte au domaine de la transmission d'informations numériques avec trames et elle a plus particulièrement pour objet la récupération de la synchronisation à la réception.

Lorsqu'une transmission d'informations numériques, notamment binaires, s'effectue en blocs organisés en mots et en trames, il est nécessaire à la réception de récupérer la synchronisation afin d'opérer correctement le découpage du flux d'informations reçu pour retrouver les mots et les trames. Cela est habituellement réalisé par la reconnaissance d'un mot, c'est-à-dire d'un ensemble de bits, prédéfini, dit mot de synchronisation, placé à un endroit déterminé de la trame, en général au début. Le problème consiste à reconnaître ce mot de synchronisation dans le flot d'informations reçues.

A cet effet, il est connu d'utiliser une mémoire, en général du type PROM (pour Programmable Read Only Memory). Les avantages d'une telle solution sont tout d'abord que les mots de synchronisation sont parfois longs (de l'ordre de la dizaine de bits ou davantage) et les reconnaître par un circuit logique du type combinatoire est très complexe; ensuite, cette solution présente une souplesse plus grande vis-à-vis d'éventuelles modifications que la logique câblée. L'inconvénient est d'ordre technologique: les mémoires PROM disponibles à l'heure actuelle sur le marché ne sont pas suffisamment rapides pour réaliser en temps réel la reconnaissance de la synchronisation pour des réseaux de transmission à haut débit, par exemple supérieur à 100 Mbits/s, notamment des réseaux utilisant des fibres optiques.

Le document FR-A-2 467 516 décrit une disposition de circuit apte à reconnaître la parole d'alignement, s'appliquant particulièrement à la section réceptrice d'un multiplexeur de signaux numériques, lequel prévoit la présence dans la section émettrice d'une unité de multiplexage qui reçoit sur n entrées autant de flux de signaux numériques et qui prévoit en outre dans la section réceptrice la présence d'une unité de démultiplexage comprenant: un premier registre constitué par n cellules de mémoire, apte à recevoir en série le flux de données multiplexé; une unité d'extraction des impulsions de synchronisation du flux de données multiplexé; un compteur, présentant la capacité de comptage n, alimenté par les impulsions qui correspondent à la sortie de ladite unité d'extraction; un deuxième registre lequel, en présence d'une impulsion qui correspond à la sortie du compteur, reçoit en parallèle, suivant l'une des n configurations possibles les bits mémorisés dans le premier registre; ladite disposition de circuit comprenant: des moyens de mémoire constitués par n registres à décalage connectés à une cellule respective du deuxième registre; des moyens de décodage aptes à exciter l'une des n sorties en réponse à la reconnaissance de la configuration suivant laquelle ont été distribués les bits exprimant la parole d'alignement dans lesdits moyens de mémoire; des moyens de codage et de mémorisation aptes à traduire le code qui correspond à la sortie desdits moyens de décodage; une matrice d'échange apte à émettre sur n sorties les bits, mémorisés dans lesdits moyens de mémoire, repérés par les codes binaires qui correspondent à la sortie desdits moyens de codage et de mémorisation.

La présente invention a pour objet un dispositif de synchronisation adapté aux hauts débits d'informations, utilisant une mémoire pour la reconnaissance du signal de synchronisation dans sa totalité et un circuit logique qui permet une préacquisition accélérée de la synchronisation, sur un nombre réduit de bits du signal de synchronisation.

Plus précisément, l'invention a pour objet un dispositif de synchronisation pour transmission numérique avec trames, les données transmises étant reçues en série sous forme binaire et comportant un signal de synchronisation, le dispositif recevant en outre un signal d'horloge représentant la fréquence ligne et comportant:

– un registre série de n positions, recevant les données binaires:

– un registre parallèle de n positions recevant en parallèle le contenu du registre série au rythme du signal horloge;

– un diviseur par n du signal horloge;

– une mémoire recevant en parallèle le contenu du registre parallèle sur commande du diviseur assurant la reconnaissance du signal de synchronisation par mots de n bits;

ledit dispositif étant caractérisé en ce qu'il comprend un circuit logique assurant la détection de m premiers bits du signal de synchronisation, délivrant le cas échéant un signal de reconnaissance, en ce que le diviseur par n du signal horloge est commandé par le signal de reconnaissance précédent, et en ce que la mémoire fournit un signal inhibant le fonctionnement du diviseur dans le cas où le signal de synchronisation n'est pas reconnu.

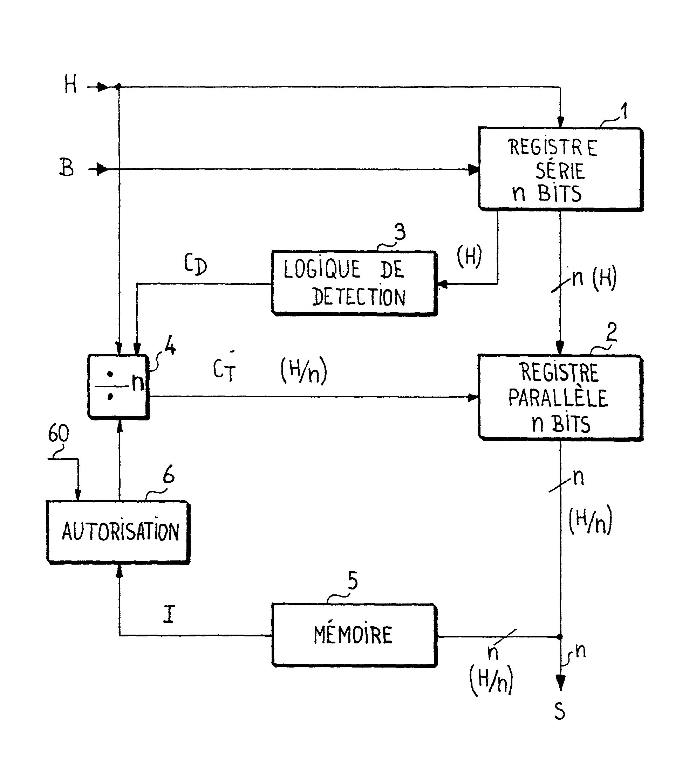

D'autres objets, particularités et résultats de l'invention ressortiront de la description suivante, donnée à titre d'exemple non limitatif et illustrée par la figure annexée, qui représente un mode de réalisation du dispositif selon l'invention.

Sur cette figure, on a représenté un registre série 1 comportant n positions, recevant un train d'informations binaires B transmis par la ligne au rythme d'un signal d'horloge H, représentant la fréquence ligne; sont donc présents un instant donné n bits du flot binaire B, par exemple $b_i$ à $b_{i+n-1}$, et au top d'horloge suivant, l'ensemble des bits se décale d'une unité, le bit $b_i$ étant perdu et le bit $b_{i+n}$ le remplaçant à l'autre extrémité. A chaque top du signal d'horloge H, le contenu du registre série 1 est transmis en parallèle (sur n bit) à un registre parallèle 2 comportant également n positions. Un dispositif 4 commande, par un signal $C_T$, la délivrance par le registre 2 de son contenu, en parallèle sur n bits, constituant le signal de sortie S du dispositif: ce signal S est donc constitué par le train binaire B découpé en mots de n bits.

Toutefois ce découpage, ainsi qu'il est rappelé ci-dessus, doit être fait en synchronisme avec l'émission, c'est-à-dire qu'il doit restituer les mots de n bits tels qu'ils ont été émis. Cela est réalisé dans le dispositif selon l'invention en deux étapes.

Dans une première étape, les m premiers bits contenus dans le registre 1 sont également dirigés, en série au rythme du signal d'horloge H, vers un circuit logique 3 dit de détection, dont la fonction est de réaliser la reconnaissance des m premiers bits d'un signal de synchronisation attendu, comportant p bits. On suppose ici que p = n. Le circuit 3 comporte par exemple un registre série, dont le contenu évolue comme celui du registre série 1, et un circuit logique du type combinatoire dont la réalisation est fonction de la forme du signal de synchronisation attendu, fournissant un signal de reconnaissance $C_D$ qui commande le dispositif 4 lorqu'est reconnu le début du signal de synchronisation.

Le dispositif 4 est un diviseur par n, recevant également le signal d'horloge H et opérant la division de ce signal H par n à partir de l'instant où il reçoit le signal $C_D$; il commande donc l'ouverture du registre parallèle 2 par le signal $C_T$ à un rythme (H/n) n fois plus lent que celui de l'horloge ligne H. Le diviseur 4 peut être par exemple constitué par un compteur, initialisé à une valeur fonction du nombre m, dont le comptage est déclenché par la commande $C_D$.

Il apparaît ainsi qu'on réalise à l'aide du circuit 3 et du diviseur 4 une préacquisition accélérée de la synchronisation sur un nombre réduit (m) de bits du signal de synchronisation, qui en comporte n dans cet exemple.

Selon l'invention, dans une seconde étape, on vérifie cette préacquisition à l'aide de l'ensemble du mot de synchronisation, en utilisant une mémoire 5, par exemple du type PROM. A cet effet, la mémoire 5 reçoit du registre parallèle 2 un mot de n bits en parallèle, au rythme H/n, qui lui permet de fournir un signal I au diviseur 4. Lorsque le mot reçu par la mémoire 5 n'est pas un mot de synchronisation, celle-ci est programmée de façon à fournir un signal I inhibant le fonctionnement du diviseur 4. Dans ce dernier cas, le processus est repris au niveau du circuit logique 3 comme décrit ci-dessus. Au contraire, lorsque ce mot est un mot de synchronisation, la mémoire fournit un signal I sans effet sur le diviseur 4. A titre d'exemple, le mot de n bits fourni par le registre 2 est considéré comme l'adresse d'une information (I) dans la mémoire 5, I étant égal à 1 dans le premier cas et à zéro dans le second.

Il apparaît ainsi que la mémoire fonctionne à une vitesse n fois inférieure à la vitesse ligne, ce qui permet l'utilisation d'une mémoire PROM même pour les fréquences H très élevées et, ainsi, de conserver les avantages inhérents à l'utilisation d'une mémoire pour la détection de la synchronisation, notamment l'aptitude à traiter des signaux de synchronisation long et/ou variables dans le temps.

Le dispositif décrit sur la figure comporte en outre un circuit 6, interposé sur le trajet du signal I vers le diviseur 4. Ce circuit 6, de type logique, par exemple réalisé par une porte ET, a pour fonction de n'autoriser une inhibition du diviseur 4 par la mémoire 5 que lorsque le récepteur, dans lequel est placé le dispositif selon l'invention, est en position de recherche de synchronisation, ce qui est représenté par une commande 60.

Dans la description précédente, on a supposé que le signal de synchronisation était exprimé sur p = n bits et que les découpages que devait réaliser le récepteur devaient également se faire par mot de n bits. Dans une variante de réalisation, le signal de synchronisation peut être exprimé sur plusieurs mots de n bits, par exemple p = 2n; le fonctionnement du dispositif est alors sensiblement le même: dans une première étape, la reconnaissance du début du premier mot de synchronisation par le circuit 3 commande ($C_D$) le déclenchement du diviseur 4, lequel commande ($C_T$) le transfert du mot en question dans la mémoire 5; s'il s'agit effectivement du premier mot de synchronisation, la mémoire le reconnaît et n'inhibe pas le diviseur 4. Lorsque le deuxième mot de synchronisation est reçu par le registre série 1, le circuit logique 3 n'a pas à le reconnaître (il n'y a pas de signal $C_D$), ce mot n'étant susceptible d'être reconnu que par la mémoire 5 qui, dans le cas où il est correct, n'envoie toujours pas de signal d'inhibition (I) au diviseur 4. Dans le cas où le deuxième mot n'est pas le mot de synchronisation attendu, la mémoire 5 envoie un signal d'inhibition I au diviseur 4 comme précédemment. Dans cette variante, le circuit logique de détection peut alors être prévu pour traiter la totalité des n bits du registre 1 (m = n), la seule limite pour le nombre m étant que la complexité du type de logique constituant le circuit 3 augmente très rapidement avec le nombre de bits traités.

Dans une variante de réalisation, lorsque le temps de propagation dans les circuits n'est pas négligeable devant la période du signal H, on utilise pour le registre série 1 un registre à n + 1 positions, l'information transmise au circuit 3 étant toujours constituée par les m premiers bits et l'information transmise au registre 2 étant constituée par les n derniers bits.

**Revendications**

1. Dispositif de synchronisation pour transmission numérique avec trames, les données transmises étant reçues en série sous forme binaire (B) et comportant un signal de synchronisation, le dispositif recevant en outre un signal d'horloge (H) représentant la fréquence ligne et comportant:
   — un registre série (1) de n positions, recevant les données binaires (B);
   — un registre parallèle (2) de n positions recevant en parallèle le contenu du registre série (1) au rythme du signal horloge (H);
   — un diviseur (4) par n du signal horloge (H);
   — une mémoire (5) recevant en parallèle le contenu du registre parallèle (2) sur commande ($C_T$)

du diviseur (4) assurant la reconnaissance du signal de synchronisation par mots de n bits;

ledit dispositif étant caractérisé en ce qu'il comprend un circuit logique (3) assurant la détection de m premiers bits du signal de synchronisation, délivrant le cas échéant un signal de reconnaissance ($C_D$), en ce que le diviseur par n (4) du signal horloge (H) est commandé par le signal de reconnaissance ($C_D$) précédent, et en ce que la mémoire (5) fournit un signal inhibant (I) le fonctionnement du diviseur (4) dans le cas où le signal de synchronisation n'est pas reconnu.

2. Dispositif selon la revendication 1, caractérisé par le fait qu'il réalise un découpage des données binaires reçues (B) en mots de n bits, que le circuit logique (3) détecte m bits avec m < n, et que le signal de synchronisation est exprimé sur un mot de n bits.

3. Dispositif selon la revendication 1, caractérisé par le fait qu'il réalise un découpage des données binaires (B) reçues en mots de n bits, que le circuit logique (3) détecte m = n bits et que le signal de synchronisation est exprimé sur un nombre de bits supérieur à n.

4. Dispositif selon l'une des revendications précédentes, caractérisé par le fait que la mémoire (I) est du type PROM.

5. Dispositif selon l'une des revendications précédentes, caractérisé par le fait qu'il comporte des moyens (6) pour interdire la réception par le diviseur (4) du signal d'inhibition (I).

6. Dispositif selon l'une des revendications précédentes, caractérisé en ce que le diviseur (4) comporte un compteur.

7. Dispositif selon l'une des revendications précédentes, caractérisé par le fait que le circuit logique (3) comporte un deuxième registre série, contenant les m premier bits contenus dans le registre série (1), et un circuit logique du type combinatoire, délivrant le signal de reconnaissance.

8. Dispositif selon l'une des revendications précédentes, caractérisé par le fait que sa sortie (S) est constituée par l'entrée de la mémoire (5).

9. Récepteur d'un système de transmission numérique avec trames, caractérisé par le fait qu'il comporte un dispositif de synchronisation selon l'une des revendications précédentes.

## Claims

1. A synchronization device for digital transmission with frames, the data transmitted being received in series in binary form (B) and comprising a synchronization signal, the device further receiving a clock signal (H) representing the line frequency and comprising:

— a series register (1) having n positions and receiving the binary data (B);

— a parallel register (2) having n positions and receiving in parallel the contents of the series register (1) at the rythm of the clock signal (H);

— a divider (4) dividing the clock signal (H) by n;

— a memory (5) receiving in parallel the contents of the parallel register (2) by order ($C_T$) of the divider (4) and ensuring recognition of the synchronization signal by words of n bits, characterized in that it comprises a logic circuit (3) ensuring detection of the first m bits of the synchronization signal and delivering, in the affirmative, a recognition signal ($C_D$), that the divider (4) of the clock signal (H) by n is controlled by said recognition signal ($C_D$) and that the memory (5) delivers a signal (I) inhibiting the operation of said divider (4) when the synchronization signal is not recognized.

2. A device according to claim 1, characterized in that the binary data (B) received are cut up into words of n bits, that the logic circuit (3) detects m bits with m < n, and that the synchronization signal is expressed over a word of n bits.

3. A device according to claim 1, characterized in that the binary data (B) received are cut up into words of n bits, that the logic circuit (3) detects m = n bits, and that the synchronization signal is expressed over a number of bits greater than n.

4. A device according to one of the preceding claims, characterized in that the memory (I) is of the PROM type.

5. A device according to one of the preceding claims, characterized in that it comprises means (6) for preventing the inhibition signal (I) from being received by said divider (4).

6. A device according to one of the preceding claims, characterized in that the divider (4) comprises a counter.

7. A device according to one of the preceding claims, characterized in that the logic circuit (3) comprises a second series register containing the first m bits contained in the first series register (1), and a logic circuit of the combinative type delivering the recognition signal.

8. A device according to one of the preceding claims, characterized in that the output (S) is formed by the input of the memory (5).

9. A receiver of a digital transmission system with frames, characterized in that it comprises a synchronization device according to any one of the preceding claims.

## Patentansprüche

1. Synchronisationsanordnung zur gerasterten digitalen Übertragung, bei der die übertragenen Daten in Reihe in Binärform (B) empfangen werden und ein Synchronisationssignal enthalten, wobei die Anordnung ein Taktsignal (H) empfängt, das die Leitungsfrequenz darstellt, und enthält:

— ein Serienregister (1) mit n Positionen, das die Binärdaten (B) aufnimmt;

— ein Parallelregister (2) mit n Positionen, das parallel den Inhalt des Serienregisters (1) im Takt des Taktsignals (H) aufnimmt;

— einen Teiler (4) mit Divisor n für das Taktsignal;

— einen Speicher (5), der auf Befehl ($C_T$) des Teilers (4) parallel den Inhalt des Parallelregisters (2) aufnimmt und die Erkennung des Synchronisationssignals über Worte mit n Bits bewirkt;

dadurch gekennzeichnet, dass sie einen logischen Schaltkreis (3) enthält, der die ersten m Bits des Synchronisationssignals erkennt und gegebenenfalls ein Erkennungssignal (C_D) liefert, dass der Teiler (4) mit Divisor n für das Taktsignal (H) durch dieses Erkennungssignal (C_D) gesteuert wird, und dass der Speicher (5) ein Signal (I) liefert, welches das Arbeiten des Teilers (4) unterbindet, wenn das Synchronisationssignal nicht erkannt wird.

2. Anordnung nach Anspruch 1, dadurch gekennzeichnet, dass sie eine Unterteilung der empfangenen Binärdaten (B) in Worte zu n Bits erfasst, dass der logische Schaltkreis (3) m Bits bei m < n erfasst, und dass das Synchronisationssignal durch ein Wort mit n Bits ausgedrückt wird.

3. Anordnung nach Anspruch 1, dadurch gekennzeichnet, dass sie eine Unterteilung der empfangenen Binärdaten (B) in Worte zu n Bits vornimmt, dass der logische Schaltkreis (3) m = n Bits erkennt, und dass das Synchronisationssignal durch eine Anzahl von Bits grösser als n ausgedrückt wird.

4. Anordnung nach einem der vorhergehenden Ansprüche, dadurch gekennzeichnet, dass der Speicher (I) vom Typ PROM ist.

5. Anordnung nach einem der vorhergehenden Ansprüche, dadurch gekennzeichnet, dass sie Mittel (6) aufweist, um den Empfang des Inhibitsignals (I) durch den Teiler (4) zu verhindern.

6. Anordnung nach einem der vorhergehenden Ansprüche, dadurch gekennzeichnet, dass der Teiler (4) einen Zähler besitzt.

7. Anordnung nach einem der vorhergehenden Ansprüche, dadurch gekennzeichnet, dass der logische Schaltkreis (3) ein zweites Serienregister aufweist, welches die ersten m Bits des Inhalts des Serienregisters (1) enthält, sowie einen logischen Schaltkreis vom kombinatorischen Typ, welcher das Erkennungssignal liefert.

8. Anordnung nach einem der vorhergehenden Ansprüche, dadurch gekennzeichnet, dass der Ausgang (S) durch den Eingang des Speichers (5) gebildet wird.

9. Empfänger für ein digitales, gerastertes Übertragungssystem, dadurch gekennzeichnet, dass er eine Synchronisationsanordnung gemäss einem der vorhergehenden Ansprüche besitzt.